# FASCICULE DE BREVET EUROPEEN

(11) **EP 4 205 508 B1**
(45) Date de publication et mention de la délivrance du brevet: **09.10.2024**
(21) Numéro de dépôt: 21816124.8
(22) Date de dépôt: 27.10.2021
(51) Int. Cl.: H05B 6/10

(54) **INSTALLATION ET PROCÉDÉ SOUS-MARIN DE CHAUFFAGE D'UN EFFLUENT POLYPHASIQUE CIRCULANT À L'INTÉRIEUR D'UNE ENVELOPPE SOUS-MARINE**
UNTERWASSERANLAGE UND VERFAHREN ZUM ERWÄRMEN EINES IN EINEM UNTERWASSERGEHÄUSE STRÖMENDEN MEHRPHASEN-ABFLUSSES
SUB-SEA FACILITY AND METHOD FOR HEATING A MULTI-PHASE EFFLUENT FLOWING INSIDE A SUB-SEA CASING

(30) Priorité: 18.12.2020 FR 2013626
(43) Date de publication de la demande: 05.07.2023
(73) Titulaire: SAIPEM S.A., 78180 Montigny Le Bretonneux (FR)
(72) Inventeur: HALLOT, Raymond, 78960 VOISINS LE BRETONNEUX (FR); VALDENAIRE, Thomas, 92400 COURBEVOIE (FR)
(74) Mandataire: Cabinet Beau de Loménie
(86) Numéro de dépôt international: PCT/FR2021/051885
(87) Numéro de publication internationale: WO 2022/129709

(56) Documents cités:
- WO-A1-2016/066968
- CN-A- 108 468 897
- US-A1- 2011 192 604

## Description

### Domaine Technique

La présente invention se rapporte au domaine général du chauffage des conduites métalliques de transport de fluides, et en particulier des conduites sous-marines reposant au fond de la mer et assurant une liaison entre des puits de production d'hydrocarbures sous-marins, notamment de pétrole et de gaz, et une installation de surface, par exemple une unité flottante de production, de stockage et de déchargement.

### Technique antérieure

Dans un même champ de production d'hydrocarbures offshore, il est courant d'exploiter plusieurs puits qui peuvent être séparés les uns des autres de plusieurs kilomètres, voire dizaines de kilomètres. Les effluents polyphasiques (mélange liquide/gaz/solide) issus de ces différents puits doivent être collectés par des conduites sous-marines posées au fond de la mer et transférés par des conduites de liaison fond/surface vers une installation de surface, par exemple un navire ou un point de collecte terrestre, qui va les recueillir pour les stocker (et éventuellement les traiter).

Par ailleurs, du fait de leur extraction à une grande profondeur dans le sous-sol, les effluents polyphasiques issus des puits de production d'hydrocarbures sous-marins sortent à une température relativement élevée au niveau du fond de la mer (typiquement de l'ordre de 70°C). L'eau de mer étant généralement froide, surtout aux grandes profondeurs où elle est typiquement de 4°C, si aucune disposition n'est prise pour conserver la chaleur des effluents en sortie des puits de production, ceux-ci vont se refroidir progressivement en parcourant les kilomètres de conduites sous-marines. Or, ces effluents diphasiques contiennent divers composés chimiques pour lesquels un refroidissement fait apparaître des phénomènes gênants pour le maintien de bonnes conditions de circulation.

Ainsi, les molécules de gaz, notamment le méthane, se combinent aux molécules d'eau pour former, à basse température, des cristaux d'hydrates. Ces derniers peuvent coller aux parois, s'y agglomérer et conduire à la formation de bouchons capables de bloquer la conduite sous-marine. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la conduite sous-marine.

Une solution connue pour éviter la formation de bouchons dans les conduites sous-marines consiste à chauffer les conduites sous-marines sur toute leur longueur grâce à un ou plusieurs câbles électriques qui sont enroulés autour des conduites pour les chauffer par effet Joule. Cette solution qui est appelée « chauffage tracé » (ou « trace heating » en anglais) permet de maintenir les effluents diphasiques transportés dans les conduites sous-marines à une température supérieure à un seuil critique sur tout leur trajet depuis le puits de production jusqu'à l'installation de surface.

Cette solution présente d'évidents problèmes liés à l'installation de tels câbles électriques de chauffage sur toute la longueur des conduites sous-marines, avec les coûts importants que cela représente en termes d'installation et de maintenance. Par ailleurs, le chauffage tracé est basé sur la continuité de l'installation tout le long des conduites sous-marines. Or, si cette continuité venait à être rompue pour une raison ou une autre à un endroit des conduites, toute l'installation se trouverait hors service. Cette contrainte impose donc de considérer ce type de chauffage uniquement pour les phases dites de préservation des effluents transportés, et non pour les phases opérationnelles de fonctionnement.

On connaît de la publication WO 2016/066968 une station de chauffage locale qui peut être placée en plusieurs endroits le long des conduites sous-marines afin d'assurer un niveau de température des effluents transportés suffisant sur une très grande longueur de conduites. En pratique, chaque station de chauffage peut comprendre un nombre d'enroulements horizontaux de conduit qui est un multiple du nombre de phases du courant électrique d'alimentation, les enroulements de conduit étant chacun d'une section de conduit autour de laquelle est enroulé un solénoïde, les solénoïdes étant connectés électriquement de manière à obtenir un montage triphasé. Ce type d'architecture présente ainsi une grande facilité d'installation et une grande souplesse d'utilisation.

Le design de la station de chauffage locale permet d'injecter des niveaux de puissance thermique très élevés en minimisant la longueur de conduite à chauffer et en respectant une température de conduite maximum (typiquement de l'ordre de 150°C). Or, bien qu'efficace, la solution de station de chauffage présentée dans la publication WO 2016/066968 nécessite de chauffer de très grandes longueurs de conduite, ce qui augmente considérablement le poids et les dimensions de la station de chauffage.

On connaît également la demande de brevet FR 19 14434 déposée le 13 décembre 2019 par la Demanderesse qui divulgue une installation sous-marine de chauffage comprenant des sections de conduite chauffées qui sont légèrement inclinées par rapport à l'horizontale (avec un angle compris entre 2 et 10°) afin d'éviter un écoulement stratifié et de favoriser un régime d'écoulement distribué de l'effluent. Ce type d'écoulement permet en effet d'améliorer significativement le coefficient d'échange thermique et donc de favoriser le transfert de puissances thermiques très élevées.

La solution décrite dans cette demande de brevet consistant à incliner légèrement les sections de conduite présente l'avantage d'éviter de favoriser un écoulement stratifié qui est inhomogène et préjudiciable au coefficient d'échange thermique. En revanche, l'installation de cette solution est relativement encombrante avec une emprise au sol importante du fait de la position essentiellement horizontale des sections de conduites.

US 2011/192604 divulgue une installation sous-marine de chauffage d'un effluent polyphasique circulant à l'intérieur d'une enveloppe sous-marine, comprenant au moins une section de conduite disposée selon une direction sensiblement verticale, la section de conduite comprenant un tube interne, un tube externe disposé autour du tube interne en lui étant coaxial, et un système de chauffage par induction du tube externe disposé autour du tube externe, le tube externe comprenant à une extrémité inférieure une ouverture d'admission afin de permettre une circulation de l'effluent polyphasique de bas en haut dans le tube interne.

### Exposé de l'invention

La présente invention a donc pour objet principal de proposer une installation sous-marine de chauffage qui ne présente pas les inconvénients précités.

Conformément à l'invention, ce but est atteint grâce à une installation sous-marine de chauffage d'un effluent polyphasique circulant à l'intérieur d'une enveloppe sous-marine, comprenant au moins une section de conduite disposée selon une direction sensiblement verticale, la section de conduite comprenant un tube interne, un tube externe disposé autour du tube interne en lui étant coaxial, une couche d'isolation thermique disposée autour du tube externe, et un système de chauffage par induction du tube externe disposé autour de la couche d'isolation thermique, le tube externe comprenant à une extrémité inférieure une ouverture d'admission afin de permettre une circulation de l'effluent polyphasique de bas en haut dans un espace annulaire délimité entre le tube externe et le tube interne, et le tube interne s'ouvrant à une extrémité supérieure à l'intérieur du tube externe et débouchant à une extrémité inférieure vers une sortie d'évacuation de l'effluent polyphasique afin de permettre une circulation à contre-courant de l'effluent polyphasique de haut en bas à l'intérieur du tube interne.

L'installation de chauffage selon l'invention est remarquable notamment en ce qu'elle prévoit une circulation de l'effluent de bas en haut dans l'annulaire entre les tubes, puis une circulation de haut en bas à l'intérieur du tube interne avec un retournement de l'effluent à l'extrémité supérieure de la section de conduite. Cette configuration présente l'avantage que si une poche de gaz se forme et stagne au point haut du dispositif, elle n'est pas soumise au chauffage par induction. Si cette poche de gaz est plus importante, elle sera entraînée vers le tube interne pour déborder dans la partie supérieure de celui-ci et sera ainsi protégée du chauffage par induction par l'écoulement liquide présent autour dans l'espace annulaire délimité entre le tube externe et le tube interne. De la sorte, il est possible d'éviter qu'une poche de gaz ne soit soumise au chauffage par induction pouvant entraîner une surchauffe destructrice de la couche d'isolation thermique.

L'installation de chauffage selon l'invention est également remarquable en ce que la verticalité des écoulements de l'effluent polyphasique à l'intérieur de la section de conduite permet de favoriser un régime d'écoulement distribué particulièrement avantageux pour augmenter significativement le coefficient d'échange thermique entre la section de conduite et l'effluent polyphasique (notamment par rapport à un régime d'écoulement stratifié). Le transfert de puissances thermiques très élevées peut être favorisé. De la sorte, la longueur de la section de conduite peut être réduite, ce qui permet de limiter fortement l'encombrement de l'installation.

De façon avantageuse, le tube interne de la section de conduite s'ouvre à une extrémité supérieure à l'intérieur du tube externe au niveau d'une portion d'extrémité de celui-ci qui est dépourvue de chauffage par induction.

La portion d'extrémité du tube externe de la section de conduite présente avantageusement à son extrémité supérieure une forme bombée vers l'extérieur de façon à limiter les pertes de charge de l'écoulement de l'effluent polyphasique lors de son passage de l'espace annulaire vers le tube interne.

Dans ce cas, la portion d'extrémité du tube externe de la section de conduite peut renfermer une pièce conique qui est bombée vers l'intérieur de façon à améliorer le guidage de l'effluent depuis l'espace annulaire vers le tube interne.

La section de passage de l'espace annulaire peut être sensiblement égale à la section de passage du tube interne. Ainsi, les vitesses d'écoulement ascendante (dans l'espace annulaire) et descendante (dans le tube interne) de l'effluent polyphasique sont sensiblement égales.

De préférence, la section de conduite comprend une pluralité de centreurs qui sont positionnés dans l'espace annulaire entre le tube externe et le tube interne. Ces centreurs permettent d'assurer un centrage et un maintien du tube interne à l'intérieur du tube externe.

Le système de chauffage par induction de la section de conduite peut comprendre au moins une bobine d'induction enroulée autour de la couche d'isolation thermique et alimentée en courant électrique alternatif de façon à générer un courant induit dans le tube externe pour le chauffer.

Dans ce cas, la section de conduite comprend en outre de préférence une enveloppe souple disposée autour de la bobine d'induction du système de chauffage afin de former une enceinte hermétique, ladite enceinte étant remplie d'un liquide en équi-pression avec l'environnement extérieur.

Le tube interne de la section de conduite est avantageusement réalisé dans un alliage résistant à la corrosion. En effet, son épaisseur et son poids sont relativement faibles par rapport au tube externe car le très faible différentiel de pression qu'il subit est sans commune mesure avec celui que subit le tube externe.

L'installation peut comprendre une pluralité de sections de conduite qui sont alimentées en effluent polyphasique par l'intermédiaire d'un distributeur commun dans lequel débouche l'ouverture d'admission du tube externe de chaque section de conduite.

En particulier, l'installation peut comprendre au moins deux faisceaux de sections de conduite, chaque faisceau comprenant une pluralité de sections de conduite, les sections de conduite de l'un des faisceaux étant alimentées en effluent polyphasique par l'intermédiaire d'un distributeur commun et alimentant en série ou en cascade en effluent polyphasique les sections de conduite d'un autre faisceau dont les sorties d'évacuation débouchent vers un collecteur commun.

Dans ce cas, l'installation peut comprendre deux faisceaux de sections de conduite comprenant chacun neuf sections de conduite. Alternativement, l'installation peut comprendre trois faisceaux de sections de conduite comprenant chacun six sections de conduite.

Les sections de conduite de l'ensemble des faisceaux sont avantageusement arrangées à l'intérieur d'un même volume parallélépipédique en plusieurs groupes distincts de sections de conduite correspondant aux différents faisceaux ou selon une disposition imbriquée des sections de conduite des différents faisceaux.

L'invention a également pour objet un procédé de chauffage sous-marin d'un effluent polyphasique circulant à l'intérieur d'une enveloppe sous-marine, comprenant la mise en circulation selon une direction verticale de bas en haut de l'effluent polyphasique à l'intérieur d'un espace annulaire délimité entre un tube externe et un tube interne coaxiaux d'une section de conduite verticale, suivie d'une circulation à contre-courant selon une direction verticale de haut en bas de l'effluent polyphasique à l'intérieur du tube interne de la section de conduite, avec l'application d'un chauffage par induction du tube externe de la section de conduite.

Le procédé selon l'invention prévoit ainsi des échanges thermiques entre les flux montant et descendant qui s'apparent à ceux d'un échangeur thermique à contre-courant : le flux descendant cède de sa chaleur au flux montant qui se trouve chauffé en grande partie par le tube externe soumis au chauffage par induction, mais aussi dans une moindre mesure par la surface interne du tube interne, qui lui est chauffé par le flux montant.

### Brève description des dessins

[Fig. 1] La figure 1 est une vue schématique d'une installation sous-marine de chauffage d'un effluent polyphasique selon l'invention.
[Fig. 2] La figure 2 est une loupe de la figure 1 montrant la partie inférieure d'une section de conduite de l'installation de la figure 1.
[Fig. 3] La figure 3 est une loupe de la figure 1 montrant la partie supérieure d'une section de conduite de l'installation de la figure 1.
[Fig. 4] La figure 4 est une vue en coupe selon IV-IV de la figure 3.
[Fig. 5] La figure 5 montre un exemple d'arrangements des sections de conduite de l'installation selon l'invention.
[Fig. 6] La figure 6 montre un exemple de connexions électriques du système de chauffage de l'installation de la figure 5.

### Description des modes de réalisation

L'invention s'applique à tout réseau de conduites sous-marines assurant une liaison entre au moins un puits de production d'hydrocarbures sous-marin et une installation de surface.

Un tel réseau de conduites sous-marines a pour but de transporter les effluents d'hydrocarbures (mélange polyphasique de pétrole, de gaz, d'eau et de particules solides) provenant d'un ou plusieurs puits de production sous-marins pour les acheminer vers une installation de surface, par exemple une unité flottante de production, de stockage et de déchargement (également appelée FPSO pour « Floating Production Storage and Offloading » en anglais).

Ces réseaux comprennent généralement plusieurs conduites sous-marines qui sont posées sur le fond marin et dans lesquelles circulent les effluents polyphasiques provenant des puits de production.

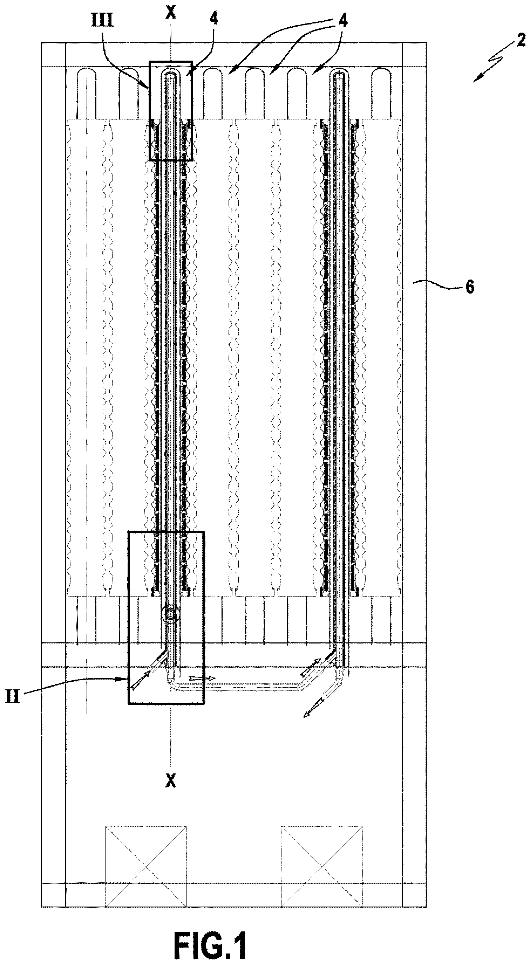

Pour maintenir les effluents transportés dans ces conduites sous-marines à une température supérieure à un seuil critique permettant d'éviter la formation de dépôts à l'intérieur desdites conduites, l'invention prévoit de raccorder les conduites à une ou plusieurs installations sous-marines de chauffage amovibles telles que celle représentée sur la figure 1.

L'installation de chauffage 2 représentée sur cette figure est raccordée de manière amovible à une conduite sous-marine (non représentée). Elle est commandée depuis l'installation en surface (non représentée sur la figure) en fonction notamment du mode de fonctionnement du réseau (typiquement : phase de fonctionnement normal, phase de préservation ou phase de redémarrage de la production).

De façon générale, l'installation de chauffage 2 selon l'invention comprend une pluralité de sections de conduite 4 qui sont raccordées les unes aux autres et qui sont disposées selon une direction sensiblement verticale. Les sections de conduite 4 sont arrangées à l'intérieur d'un châssis 6 de forme parallélépipédique.

Chaque section de conduite 4 est disposée verticalement, c'est-à-dire qu'elle s'étend selon une direction principalement verticale, c'est-à-dire parallèle à la direction de la pesanteur.

Par ailleurs, chaque section de conduite 4 comprend un tube interne 8 centré sur un axe vertical X-X et un tube externe 10 disposé autour du tube interne en lui étant coaxial.

Au niveau de son extrémité verticale inférieure, le tube externe 10 comprend une ouverture d'admission 12 qui permet une circulation verticale de l'effluent polyphasique du bas vers le haut dans l'espace annulaire 14 qui est délimité entre le tube externe et le tube interne.

Au niveau de son extrémité verticale supérieure, le tube interne 8 s'ouvre à l'intérieur d'une extrémité verticale supérieure du tube externe 10. Enfin, au niveau de son extrémité verticale inférieure, le tube interne 8 débouche vers une sortie d'évacuation 16 de l'effluent polyphasique.

Ainsi, l'effluent polyphasique provenant de la conduite sous-marine pénètre à l'intérieur de la section de conduite 4 de l'installation de chauffage selon l'invention par le bas en s'introduisant dans l'espace annulaire 14 délimité entre le tube externe et le tube interne par l'ouverture d'admission 12. L'effluent s'écoule verticalement dans cet espace annulaire 14 du bas vers le haut, puis, au niveau de l'extrémité supérieure de la section de conduite, se retourne pour être dirigé vers le tube interne 8 à l'intérieur duquel il s'écoule verticalement du haut vers le bas. L'effluent est alors évacué par le bas de la section de conduite par l'intermédiaire de la sortie d'évacuation 16.

On notera que la section de passage de l'espace annulaire 14 délimité entre le tube externe et le tube interne peut être égale à la section de passage du tube interne 8 de sorte que les vitesses d'écoulement de l'effluent sont identiques dans le sens ascendant et le sens descendant. Idéalement, la section de passage de l'espace annulaire 14 est minimisée afin d'obtenir une vitesse d'écoulement la plus élevée possible, ce qui favorise le transfert thermique. De même, il est préférable d'avoir un tube interne présentant une faible section de passage de façon à diminuer le diamètre du tube externe, et donc le poids global de la section de conduite.

On notera également que la différence de pression entre l'intérieur du tube interne 8 et l'intérieur de l'espace annulaire 14 délimité entre le tube externe et le tube interne est très faible, de sorte qu'il est possible et avantageux de donner une épaisseur très faible (de l'ordre de quelques millimètres) au tube interne. Par exemple, ce dernier pourra être réalisé en alliage résistant à la corrosion.

Chaque section de conduite 4 de l'installation de chauffage selon l'invention comprend en outre une couche d'isolation thermique 18 qui est disposée autour du tube externe 10, ainsi qu'un système de chauffage par induction 20 du tube externe qui est disposé autour de la couche d'isolation thermique 18.

Le système de chauffage par induction 20 se compose d'une ou plusieurs bobines d'induction 22 qui sont enroulées en rangées superposées autour de la couche d'isolation thermique 18. Ces bobines d'induction 22 sont alimentées en courant électrique alternatif de façon à générer un courant induit dans le tube externe 10 pour le chauffer.

Le système de chauffage par induction comprend également une enveloppe souple 24 qui est disposée autour des bobines d'induction 22 afin de former une enceinte hermétique, cette dernière étant remplie d'un liquide qui est en équi-pression avec l'environnement extérieur (à savoir l'eau de mer environnante).

Les bobines d'induction 22 du système de chauffage s'étendent sur toute la hauteur de la section de conduite, à l'exception d'une portion d'extrémité supérieure P qui n'est pas entourée par les bobines d'induction, et donc qui n'est soumise au chauffage par induction.

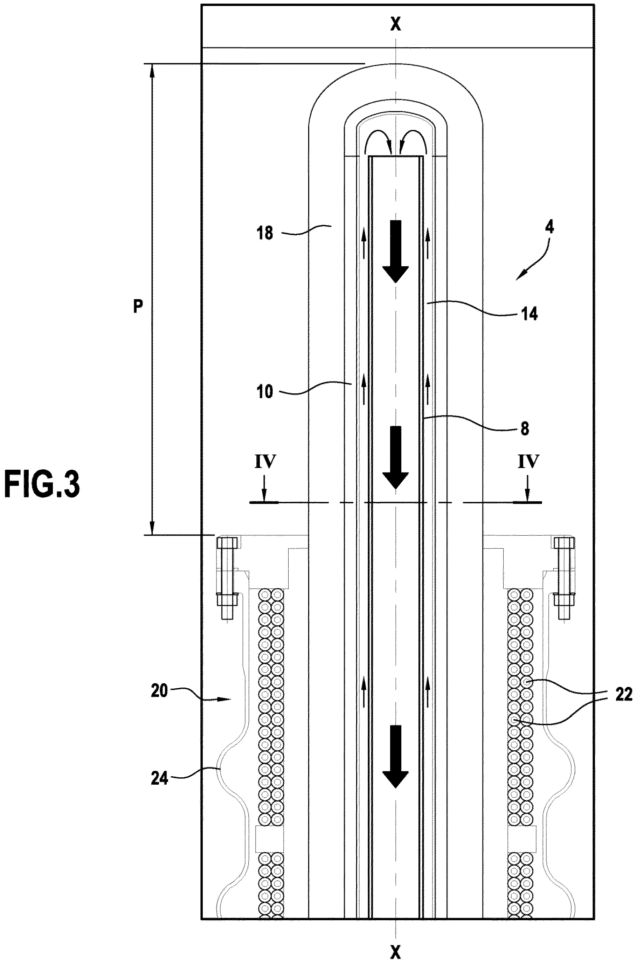

Cette portion d'extrémité supérieure P non chauffée qui est visible notamment sur la figure 3 englobe notamment la zone d'extrémité supérieure du tube externe 10 dans laquelle s'ouvre le tube interne 8 (zone dans laquelle l'effluent polyphasique se retourne pour être dirigé à l'intérieur du tube interne).

Cette zone d'extrémité supérieure du tube externe 10 est l'endroit dans lequel une poche de gaz de l'effluent polyphasique en circulation dans la section de conduite risque de stagner. Comme cette zone n'est pas soumise au chauffage par induction, il n'y a donc pas de risque de chauffer du gaz stagnant dans cette partie haute pouvant entraîner une surchauffe destructrice de la couche d'isolation thermique 18.

Selon une disposition avantageuse visible notamment sur la figure 3, la portion d'extrémité du tube externe 10 de la section de conduite présente à son extrémité supérieure une forme 10a qui est bombée vers l'extérieur. Cette forme bombée 10a permet d'accroitre la résistance au différentiel de pression interne/externe et de limiter les pertes de charge de l'écoulement de l'effluent polyphasique lors de son passage de l'espace annulaire 14 vers l'intérieur du tube interne 8.

Selon une autre disposition avantageuse non représentée sur les figures, la portion d'extrémité du tube externe 10 de la section de conduite peut renfermer une pièce conique qui est bombée vers l'intérieur de façon à améliorer le guidage de l'effluent depuis l'espace annulaire 14 vers l'intérieur du tube interne 8.

Selon encore une autre disposition avantageuse non représentée sur les figures, la section de conduite comprend également une pluralité de centreurs qui sont positionnés dans l'espace annulaire 14 entre le tube externe et le tube interne. Ces centreurs permettent d'assurer un centrage et un maintien du tube interne à l'intérieur du tube externe.

Par exemple, les centreurs peuvent se présenter sous la forme d'anneaux qui sont ajourés pour perturber le moins possible l'écoulement de l'effluent polyphasique dans l'espace annulaire entre le tube externe et le tube interne.

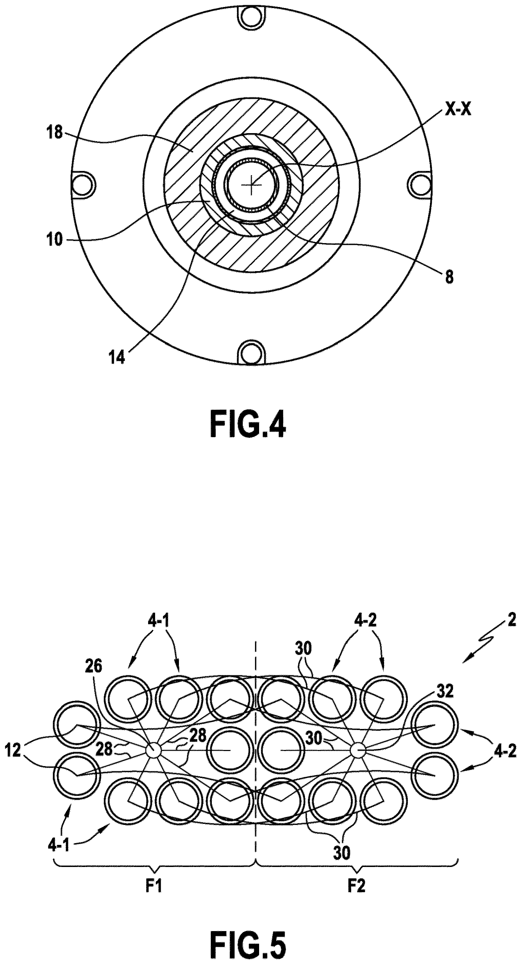

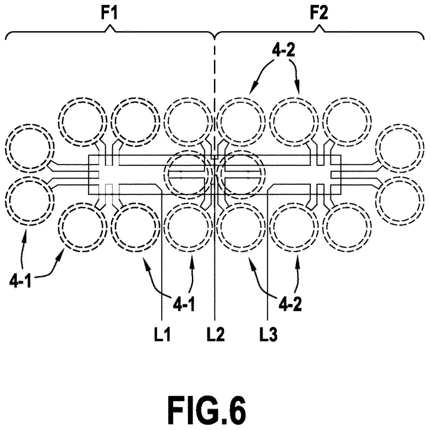

En liaison avec les figures 5 et 6, on décrira maintenant un exemple d'arrangement des sections de conduite de l'installation de chauffage selon l'invention.

Dans cet exemple de réalisation, les sections de conduite 4 de l'installation de chauffage sont arrangées selon deux faisceaux distincts F1, F2 de chacun neuf sections de conduite.

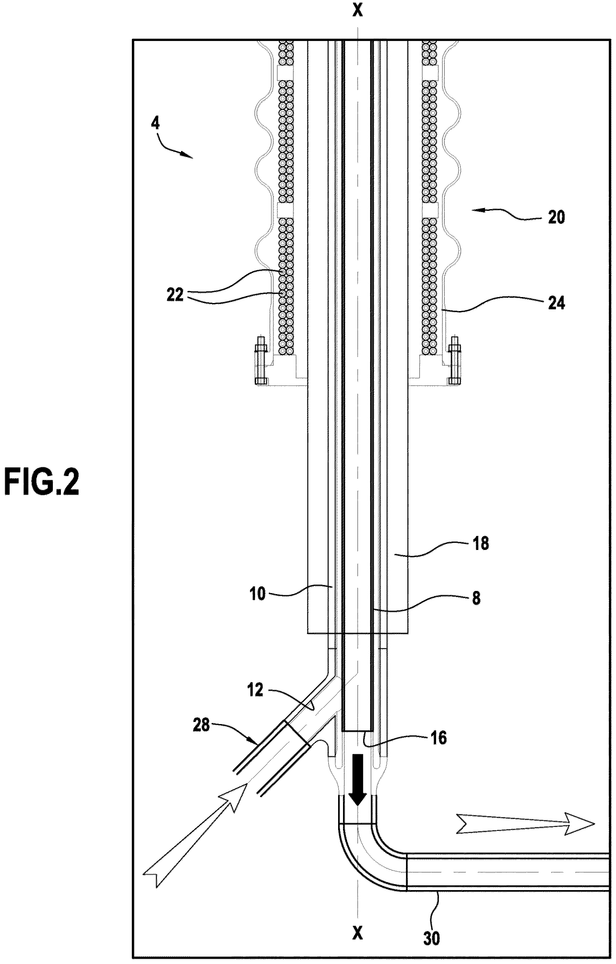

Chaque faisceau F1, F2 comprend ainsi neuf sections de conduite, respectivement 4-1 et 4-2, les sections de conduite 4-1 de l'un des faisceaux (ici le faisceau F1) étant alimentées en effluent polyphasique par l'intermédiaire d'un distributeur commun 26. Ce distributeur 26 est positionné au centre des sections de conduite 4-1 et est raccordé par des raccords 28 (voir la figure 2) à l'ouverture d'admission 12 du tube externe de chaque section de conduite.

Par ailleurs, chacune des sections de conduite 4-1 du faisceau F1 alimente en effluent polyphasique les sections de conduite 4-2 de l'autre faisceau F2. Cette alimentation des sections de conduite du second faisceau peut se faire en série ou en cascade (c'est-à-dire en parallèle).

Dans l'exemple de réalisation des figures 2 et 5, cette alimentation est en série et réalisée au moyen de raccords 30 reliant la sortie d'évacuation 16 du tube interne de chaque section de conduite 4-1 du faisceau F1 à l'ouverture d'admission 12 du tube externe de chaque section de conduite 4-2 de l'autre faisceau F2.

De plus, les sorties d'évacuation 16 du tube interne de chaque section de conduite 4-2 du faisceau F2 débouchent vers un collecteur de sortie commun 32.

La figure 6 représente le schéma d'alimentation électrique de l'installation de chauffage selon l'arrangement décrit en liaison avec la figure 5.

Plus précisément, cette figure 6 montre les différentes connexions électriques des bobines d'induction du système de chauffage de chaque section de conduite 4-1, 4-2 des deux faisceaux F1, F2 aux trois phases d'un réseau de puissance électrique triphasé.

L'alimentation électrique se fait par l'intermédiaire d'un courant électrique triphasé dont chaque phase L1, L2 et L3 est connectée à un groupe de six sections de conduite 4-1, 4-2. Plus précisément, la phase L1 est connectée à un groupe de six sections de conduite 4-1 du faisceau F1, la phase L2 est connectée à un groupe de comprenant trois sections de conduite 4-1 du faisceau F1 et trois sections de conduite 4-2 du faisceau F2, et L3 est connectée à un groupe de six sections de conduite 4-2 du faisceau F2.

D'autres arrangements que ceux décrits en liaison avec les figures 5 et 6 peuvent bien entendu être envisagés.

Par exemple, les sections de conduite des deux faisceaux peuvent être arrangées selon une disposition imbriquée, plutôt qu'une disposition en deux groupes distincts.

De même, l'installation de chauffage peut comprendre alternativement trois faisceaux de sections de conduite comprenant chacun six sections de conduite.

## Revendications

1. Installation sous-marine de chauffage (2) d'un effluent polyphasique circulant à l'intérieur d'une enveloppe sous-marine, comprenant au moins une section de conduite (4) disposée selon une direction sensiblement verticale, la section de conduite comprenant un tube interne (8), un tube externe (10) disposé autour du tube interne en lui étant coaxial, une couche d'isolation thermique (18) disposée autour du tube externe, et un système de chauffage par induction (20) du tube externe disposé autour de la couche d'isolation thermique, le tube externe comprenant à une extrémité inférieure une ouverture d'admission (12) afin de permettre une circulation de l'effluent polyphasique de bas en haut dans un espace annulaire (14) délimité entre le tube externe et le tube interne, et le tube interne s'ouvrant à une extrémité supérieure à l'intérieur du tube externe et débouchant à une extrémité inférieure vers une sortie d'évacuation (16) de l'effluent polyphasique afin de permettre une circulation à contre-courant de l'effluent polyphasique de haut en bas à l'intérieur du tube interne.

2. Installation selon la revendication 1, dans laquelle le tube interne (8) de la section de conduite (4) s'ouvre à une extrémité supérieure à l'intérieur du tube externe au niveau d'une portion d'extrémité de celui-ci qui est dépourvue de chauffage par induction.

3. Installation selon la revendication 2, dans laquelle la portion d'extrémité du tube externe (10) de la section de conduite (4) présente à son extrémité supérieure une forme bombée (10a) vers l'extérieur de façon à limiter les pertes de charge de l'écoulement de l'effluent polyphasique lors de son passage de l'espace annulaire vers le tube interne.

4. Installation selon l'une des revendications 2 et 3, dans laquelle la portion d'extrémité du tube externe de la section de conduite renferme une pièce conique qui est bombée vers l'intérieur de façon à améliorer le guidage de l'effluent depuis l'espace annulaire vers le tube interne.

5. Installation selon l'une quelconque des revendications 1 à 4, dans laquelle la section de passage de l'espace annulaire (14) est sensiblement égale à la section de passage du tube interne (8).

6. Installation selon l'une quelconque des revendications 1 à 5, dans laquelle la section de conduite comprend une pluralité de centreurs qui sont positionnés dans l'espace annulaire entre le tube externe et le tube interne.

7. Installation selon l'une quelconque des revendications 1 à 6, dans laquelle le système de chauffage par induction (20) de la section de conduite comprend au moins une bobine d'induction (22) enroulée autour de la couche d'isolation thermique (18) et alimentée en courant électrique alternatif de façon à générer un courant induit dans le tube externe pour le chauffer.

8. Installation selon la revendication 7, dans laquelle la section de conduite (4) comprend en outre une enveloppe souple (24) disposée autour de la bobine d'induction (22) du système de chauffage afin de former une enceinte hermétique, ladite enceinte étant remplie d'un liquide en équi-pression avec l'environnement extérieur.

9. Installation selon l'une quelconque des revendications 1 à 8, dans laquelle le tube interne (8) de la section de conduite (4) est réalisé dans un alliage résistant à la corrosion.

10. Installation selon l'une quelconque des revendications 1 à 9, comprenant une pluralité de sections de conduite (4-1, 4-2) qui sont alimentées en effluent polyphasique par l'intermédiaire d'un distributeur commun (26) dans lequel débouche l'ouverture d'admission (12) du tube externe (8) de chaque section de conduite.

11. Installation selon la revendication 10, comprenant au moins deux faisceaux (F1, F2) de sections de conduite, chaque faisceau comprenant une pluralité de sections de conduite (4-1, 4-2), les sections de conduite de l'un des faisceaux étant alimentées en effluent polyphasique par l'intermédiaire d'un distributeur commun (26) et alimentant en série ou en cascade en effluent polyphasique les sections de conduite d'un autre faisceau dont les sorties d'évacuation débouchent vers un collecteur commun (32).

12. Installation selon la revendication 11, comprenant deux faisceaux (F1, F2) de sections de conduite comprenant chacun neuf sections de conduite (4-1, 4-2).

13. Installation selon la revendication 11, comprenant trois faisceaux de sections de conduite comprenant chacun six sections de conduite.

14. Installation selon l'une des revendications 12 et 13, dans laquelle les sections de conduite de l'ensemble des faisceaux sont arrangées à l'intérieur d'un même volume parallélépipédique (6) en plusieurs groupes distincts de sections de conduite correspondant aux différents faisceaux ou selon une disposition imbriquée des sections de conduite des différents faisceaux.

15. Procédé de chauffage sous-marin d'un effluent polyphasique circulant à l'intérieur d'une enveloppe sous-marine, comprenant la mise en circulation selon une direction verticale de bas en haut de l'effluent polyphasique à l'intérieur d'un espace annulaire (14) délimité entre un tube externe (10) et un tube interne (8) coaxiaux d'une section de conduite (4) verticale, suivie d'une circulation à contre-courant selon une direction verticale de haut en bas de l'effluent polyphasique à l'intérieur du tube interne de la section de conduite, avec l'application d'un chauffage par induction du tube externe de la section de conduite.

## Patentansprüche

1. Unterwassererwärmungsanlage (2) für einen mehrphasigen Abfluss, der innerhalb eines Unterwassergehäuses zirkuliert, umfassend mindestens eine Leitungssektion (4), die in einer im Wesentlichen vertikalen Richtung angeordnet ist, wobei die Leitungssektion ein Innenrohr (8), ein Außenrohr (10), das koaxial um das Innenrohr angeordnet ist, eine Wärmeisolationsschicht (18), die um das Außenrohr angeordnet ist, und ein Induktionserwärmungssystem (20) des Außenrohres, das um die Wärmeisolationsschicht angeordnet ist, umfasst, wobei das Außenrohr an einem unteren Ende eine Einlassöffnung (12) umfasst, um eine Zirkulation des mehrphasigen Abflusses von unten nach oben in einem Ringraum (14) zu ermöglichen, der zwischen dem Außenrohr und dem Innenrohr begrenzt ist, und sich das Innenrohr an einem oberen Ende in das Innere des Außenrohres öffnet und an einem unteren Ende zu einem Evakuierungsauslass (16) des mehrphasigen Abflusses mündet, um eine Gegenstromzirkulation des mehrphasigen Abflusses von oben nach unten innerhalb des Innenrohres zu ermöglichen.

2. Anlage nach Anspruch 1, wobei sich das Innenrohr (8) der Leitungssektion (4) an einem oberen Ende innerhalb des Außenrohres auf Höhe eines Endabschnittes davon, der keine Induktionserwärmung aufweist, öffnet.

3. Anlage nach Anspruch 2, wobei der Endabschnitt des Außenrohres (10) der Leitungssektion (4) an seinem oberen Ende eine nach außen gewölbte Form (10a) aufweist, um die Druckverluste des Flusses des mehrphasigen Abflusses auf seinem Weg von dem Ringraum zu dem Innenrohr zu begrenzen.

4. Anlage nach einem der Ansprüche 2 und 3, wobei der Endabschnitt des Außenrohres der Leitungssektion einen konischen Teil umschließt, der nach innen gewölbt ist, um die Führung des Abflusses von dem Ringraum zu dem Innenrohr zu verbessern.

5. Anlage nach einem der Ansprüche 1 bis 4, wobei die Durchlasssektion des Ringraums (14) im Wesentlichen gleich der Durchlasssektion des Innenrohres (8) ist.

6. Anlage nach einem der Ansprüche 1 bis 5, wobei die Leitungssektion mehrere Zentriervorrichtungen umfasst, die in dem Ringraum zwischen dem Außenrohr und dem Innenrohr positioniert sind.

7. Anlage nach einem der Ansprüche 1 bis 6, wobei das Induktionserwärmungssystem (20) der Leitungssektion mindestens eine Induktionsspule (22) umfasst, die um die Wärmeisolationsschicht (18) gewickelt ist und mit Wechselstrom gespeist wird, um einen induzierten Strom in dem Außenrohr zu erzeugen, um es zu erwärmen.

8. Anlage nach Anspruch 7, wobei die Leitungssektion (4) ferner ein flexibles Gehäuse (24) umfasst, das um die Induktionsspule (22) des Erwärmungssystems angeordnet ist, um eine hermetische Hülle zu bilden, wobei die Hülle mit einer Flüssigkeit mit gleichem Druck wie die Außenumgebung gefüllt ist.

9. Anlage nach einem der Ansprüche 1 bis 8, wobei das Innenrohr (8) der Leitungssektion (4) aus einer korrosionsbeständigen Legierung umgesetzt ist.

10. Anlage nach einem der Ansprüche 1 bis 9, umfassend mehrere Leitungssektionen (4-1, 4-2), die über einen gemeinsamen Verteiler (26), in den die Einlassöffnung (12) des Außenrohres (8) jeder Leitungssektion mündet, mit mehrphasigem Abfluss gespeist werden.

11. Anlage nach Anspruch 10, umfassend mindestens zwei Bündel (F1, F2) von Leitungssektionen, wobei jedes Bündel mehrere Leitungssektionen (4-1, 4-2) umfasst, wobei die Leitungssektionen des einen der Bündel über einen gemeinsamen Verteiler (26) mit mehrphasigem Abfluss gespeist werden und die Leitungssektionen eines anderen Bündels, dessen Evakuierungsauslässe zu einem gemeinsamen Sammler (32) münden, in Reihe oder in Kaskade mit mehrphasigem Abfluss speisen.

12. Anlage nach Anspruch 11, umfassend zwei Bündel (F1, F2) von Leitungssektionen, die jeweils neun Leitungssektionen (4-1, 4-2) umfassen.

13. Anlage nach Anspruch 11, umfassend drei Bündel von Leitungssektionen, die jeweils sechs Leitungssektionen umfassen.

14. Anlage nach einem der Ansprüche 12 und 13, wobei die Leitungssektionen von allen Bündeln innerhalb eines gleichen quaderförmigen Volumens (6) in mehreren unterschiedlichen Gruppen von Leitungssektionen, die den verschiedenen Bündeln entsprechen, oder in einer verschachtelten Anordnung der Leitungssektionen der verschiedenen Bündel angeordnet sind.

15. Unterwassererwärmungsverfahren eines mehrphasigen Abflusses, der innerhalb eines Unterwassergehäuses zirkuliert, umfassend das Zirkulieren des mehrphasigen Abflusses innerhalb eines Ringraums (14), der zwischen einem koaxialen Außenrohr (10) und einem koaxialen Innenrohr (8) einer vertikalen Leitungssektion (4) begrenzt ist, in einer vertikalen Richtung von unten nach oben, gefolgt von einer Gegenstromzirkulation in einer vertikalen Richtung des mehrphasigen Abflusses von oben nach unten innerhalb des Innenrohres der Leitungssektion mit Anwendung einer Induktionserwärmung des Außenrohres der Leitungssektion.

## Claims

1. A subsea installation (2) for heating a multiphase effluent circulating inside a subsea shell, comprising at least one pipeline section (4) disposed along a substantially vertical direction, the pipeline section comprising an inner tube (8), an outer tube (10) disposed around the inner tube while being coaxial therewith, a thermal insulation layer (18) disposed around the outer tube, and a system (20) for heating by induction the outer tube disposed around the thermal insulation layer, the outer tube comprising at a lower end an intake aperture (12) in order to allow circulation of the multiphase effluent from bottom to top in an annular space (14) delimited between the outer tube and the inner tube, and the inner tube opening at an upper end inside the outer tube and emerging at a lower end towards a discharge outlet (16) for the multiphase effluent in order to allow counter-current circulation of the multiphase effluent from top to bottom inside the inner tube.

2. The installation according to claim 1, wherein the inner tube (8) of the pipeline section (4) opens at an upper end inside the outer tube at an end segment thereof which is devoid of induction heating.

3. The installation according to claim 2, wherein the end segment of the outer tube (10) of the pipeline section (4) has at its upper end a curved shape (10a) outwards so as to limit the pressure drops of the flow of the multiphase effluent during its passage from the annular space towards the inner tube.

4. The installation according to any of claims 2 and 3, wherein the end segment of the outer tube of the pipeline section contains a conical part which is curved inwards so as to improve the guiding of the effluent from the annular space towards the inner tube.

5. The installation according to any one of claims 1 to 4, wherein the passage section of the annular space (14) is substantially equal to the passage section of the inner tube (8).

6. The installation according to any one of claims 1 to 5, wherein the pipeline section comprises a plurality of centralizers which are positioned in the annular space between the outer tube and the inner tube.

7. The installation according to any one of claims 1 to 6, wherein the system (20) for heating by induction the pipeline section comprises at least one induction coil (22) wound around the thermal insulation layer (18) and supplied with alternating electric current so as to generate an induced current in the outer tube to heat it.

8. The installation according to claim 7, wherein the pipeline section (4) further comprises a flexible shell (24) disposed around the induction coil (22) of the heating system in order to form a hermetic enclosure, said enclosure being filled with a liquid at equal pressure with the external environment.

9. The installation according to any one of claims 1 to 8, wherein the inner tube (8) of the pipeline section (4) is made of a corrosion-resistant alloy.

10. The installation according to any one of claims 1 to 9, comprising a plurality of pipeline sections (4-1, 4-2) which are supplied with multiphase effluent via a common distributor (26) into which the intake aperture (12) of the outer tube (8) of each pipeline section emerges.

11. The installation according to claim 10, comprising at least two bundles (F1, F2) of pipeline sections, each bundle comprising a plurality of pipeline sections (4-1, 4-2), the pipeline sections of the one of the bundles being supplied with multiphase effluent via a common distributor (26) and supplying in series or in cascade multiphase effluent to the pipeline sections of another bundle whose discharge outlets emerge towards a common manifold (32).

12. The installation according to claim 11, comprising two bundles (F1, F2) of pipeline sections each comprising nine pipeline sections (4-1, 4-2).

13. The installation according to claim 11, comprising three bundles of pipeline sections each comprising six pipeline sections.

14. The installation according to any of claims 12 and 13, wherein the pipeline sections of all the bundles are arranged inside the same parallelepiped volume (6) in several distinct groups of pipeline sections corresponding to the different bundles or in an interlocked disposition of the pipeline sections of the different bundles.

15. A method for the subsea heating of a multiphase effluent circulating inside a subsea shell, comprising the circulation, along a vertical direction from bottom to top, of the multiphase effluent inside of an annular space (14) delimited between coaxial outer (10) and an inner (8) tubes of a vertical pipeline section (4), followed by counter-current circulation, along a vertical direction from top to bottom, of the multiphase effluent inside the inner tube of the pipeline section, with the application of an induction heating of the outer tube of the pipeline section.
